# EUROPÄISCHE PATENTSCHRIFT

(11) **EP 1 541 420 B1**
(45) Veröffentlichungstag und Bekanntmachung des Hinweises auf die Patenterteilung: **13.09.2006**
(21) Anmeldenummer: 04450226.8
(22) Anmeldetag: 10.12.2004
(51) Int. Cl.: B60R 13/10

(54) **Vorrichtung zum Befestigen einer Kennzeichentafel an einem Kraftfahrzeug**
Device for attaching a license plate to a vehicle
Dispositif pour attacher une plaque d'immatriculation au véhicule

(30) Priorität: 11.12.2003 AT 20031990
(43) Veröffentlichungstag der Anmeldung: 15.06.2005
(73) Patentinhaber: Bamberger, Christoph, Dr., 5020 Salzburg (AT); Praschberger, Sebastian, 5165 Berndorf (AT)
(72) Erfinder: Bamberger, Christoph, 5020 Salzburg (AT); Praschberger, Sebastian, 5650 Berndorf (AT); Mayr, Johann, 5204 Strasswalchen (AT)
(74) Vertreter: Hübscher, Helmut

(56) Entgegenhaltungen:
- AT-B- 393 656
- PATENT ABSTRACTS OF JAPAN Bd. 1995, Nr. 08, 29. September 1995 (1995-09-29) & JP 07 125580 A (SHOWA SHELL SEKIYU KK), 16. Mai 1995 (1995-05-16)

## Beschreibung

Die Erfindung bezieht sich auf eine Vorrichtung zum Befestigen einer Kennzeichentafel an einem Kraftfahrzeug mit einer am Kraftfahrzeug vorgesehenen Halterung für die Kennzeichentafel und mit einer an eine elektrische Stromquelle des Kraftfahrzeugs anschließbaren, elektrischen Heizeinrichtung für die Kennzeichentafel.

Für die Verkehrsüberwachung ist eine sichere optische Erkennung der Kennzeichentafeln von Kraftfahrzeugen unerläßlich. Da die Halterungen zur Befestigung der Kennzeichen, insbesondere im Frontbereich der Kraftfahrzeuge, häufig im Stoßstangenbereich angeordnet sind, sind die in die Halterungen eingesetzten Kennzeichentafeln einer erheblichen Verschmutzungsgefahr ausgesetzt, die vor allem in der kalten Jahreszeit eine optische Erkennung des Kennzeichens dann unmöglich macht, wenn aufgrund entsprechend niedriger Temperaturen mit einer Eisbildung gerechnet werden muß, so daß das Kennzeichen durch eisige Ablagerungen auf der Kennzeichentafel zumindest teilweise unleserlich abgedeckt wird, und zwar auf längere Zeit. Zur Vermeidung solcher Ablagerungen wurde bereits bei selbstleuchtenden Kennzeichentafeln vorgeschlagen (AT 393 656 B), die transparente Umhüllung oder Abdeckung der Kennzeichentafel zu beheizen, um ein temperaturbedingtes Beschlagen oder Vereisen zu verhindern und die für die Kennzeichenbeleuchtung erforderliche Elektronik vor nachteiligen Temperatureinflüssen zu schützen. Zur Beheizung einer Kennzeichentafel ist es außerdem bekannt (JP 07-125580 A), die Kennzeichentafel aus Aluminium auf der Rückseite zunächst mit einer elektrischen Isolierschicht und dann mit einem elektrischen Flächenheizelement zu beschichten, das wiederum mit einer isolierenden Abdecklage versehen wird. Nachteilig bei diesen bekannten Heizeinrichtungen für Kennzeichentafeln ist vor allem, daß sie einerseits besondere Maßnahmen an den Kennzeichentafeln erfordern und anderseits vom Lenker des Kraftfahrzeuges eingeschaltet werden, was das Einschalten der Heizung für die Kennzeichentafeln von der Entscheidung des Fahrzeuglenkers abhängig macht, so daß unter Umständen die Heizung trotz eines Bedarfes nicht betätigt wird und im Falle der Benützung zu einem vergleichsweise hohen Stromverbrauch führt.

Der Erfindung liegt somit die Aufgabe zugrunde, eine Vorrichtung der eingangs geschilderten Art zum Befestigen einer Kennzeichentafel an einem Kraftfahrzeug so auszugestalten, daß ein bedarfsgerechtes Einschalten der Heizeinrichtung sichergestellt wird, ohne auf den Einsatz üblicher Kennzeichentafeln verzichten zu müssen.

Die Erfindung löst die gestellte Aufgabe dadurch, daß die auf einem Träger zwischen der Kennzeichentafel und der Halterung vorgesehene elektrische Heizeinrichtung in Abhängigkeit von wenigstens einem im Halterungsbereich angeordneten Temperaturfühler angesteuert ist.

Zufolge der Anordnung der elektrischen Heizeinrichtung auf einem Träger bedarf es keiner konstruktiven Änderungen im Bereich der Kennzeichentafeln, aber im allgemeinen auch nicht im Bereich der Halterungen, weil bei üblichen Halterungen zwischen den Kennzeichentafeln und der Rückwand der Halterung ausreichend Platz für den Träger mit der Heizeinrichtung bleibt. Dazu kommt, daß die Heizeinrichtung von einem im Halterungsbereich vorgesehenen Temperaturfühler angesteuert wird, was eine wesentliche Voraussetzung für ein automatisches Einschalten der Heizung im Bedarfsfall darstellt und in weiterer Folge zu einer Energieeinsparung führt, zumal über den Temperaturfühler die Temperatur im Halterungsbereich und damit die an der Kennzeichentafel unmittelbar wirksame Temperatur für die Heizungssteuerung erfaßt wird. Die in die Halterung eingesetzte Kennzeichentafel kann somit in einfacher Weise auf eine Temperatur aufgeheizt werden, die ein Aneisen von Ablagerungen auf der Kennzeichentafel verhindert und mit dem Schmelzwasser eine weitgehende Selbstreinigung ermöglicht.

Um eine Ableitung der Wärmeenergie auf der der Kennzeichentafel abgewandten Seite der Heizeinrichtung zu vermeiden, kann auf der der Kennzeichentafel abgekehrten Seite der Heizeinrichtung eine Wärmeisolierung vorgesehen werden.

Besonders günstige Verhältnisse hinsichtlich des jeweiligen Energieeinsatzes ergeben sich, wenn die elektrische Heizeinrichtung in je für sich über einen Temperaturfühler ansteuerbare, über die Fläche der Kennzeichentafel verteilte Heizkreise unterteilt ist, weil in diesem Fall die Kennzeichentafel nur bereichsweise in jenen Flächenabschnitten beheizt zu werden braucht, die eine Vereisung aufweisen. Mit Hilfe der Unterteilung der Heizeinrichtung in Heizkreise kann nämlich ohne weiteres berücksichtigt werden, daß im Bereich von Aneisungen beispielsweise nach dem Einschalten aller Heizkreise die angeeisten Bereiche eine niedrigere Temperatur aufweisen, so daß die Heizleistung entsprechend angepaßt werden kann. Eine weitere Anpassungsmöglichkeit ergibt sich dadurch, daß innerhalb der einzelnen Heizkreise die Heizleiterverteilung über den jeweiligen Flächenabschnitt der Kennzeichentafel unterschiedlich ist, so daß die unteren und seitlichen Randzonen der Kennzeichentafel, die erfahrungsgemäß vermehrt zur Vereisung neigen, stärker als die anderen Zonen beheizt werden können.

Eine Möglichkeit für die Trägerausbildung der Heizeinrichtung besteht darin, eine elektrische Heizmatte vorzusehen, in der der Träger mit den Heizleitern zu einer Baueinheit zusammengefaßt ist. Die Ansteuerung dieser Heizmatte kann über einen Kaltleiter, also einen PTC-Widerstand, erfolgen, der als Temperaturfühler dient und die Heizmatte an die Stromquelle des Fahrzeugs anschließt, sobald eine vorgegebene Temperatur unterschritten wird.

Eine andere Ausbildungsmöglichkeit für die Heizeinrichtung ergibt sich, wenn auf der der Kennzeichentafel abgekehrten Seite des elektrisch isolierenden Trägers neben einem Heizleiter für zumindest einen Heizkreis ein Temperaturfühler für jeden Heizkreis und eine an den bzw. die Temperaturfühler angeschlossene Steuereinrichtung für die Heizeinrichtung vorgesehen sind. Mit beispielsweise als Temperatursensoren ausgebildeten Temperaturfühlern, die mit einer Steuereinrichtung für die Heizeinrichtung verbunden sind, lassen sich die Heizbedingungen entsprechend einem vorgegebenen Steuerprogramm wählen, so daß beispielsweise die Kennzeichentafelbeheizung in Abhängigkeit von einem zeitlichen Temperaturverlauf gesteuert werden kann, was einen an die jeweiligen Bedarfsfälle angepaßten Heizungseinsatz erlaubt.

Um nicht nur auf die Selbstreinigungswirkung der abgetauten Ablagerungen auf der Kennzeichentafel angewiesen zu sein, kann der Halterung zusätzlich wenigstens eine gegen die Vorderseite der Kennzeichentafel gerichtete Waschdüse zugeordnet werden, über die Reinigungsflüssigkeit auf die Kennzeichentafel gesprüht werden kann. Diese Waschdüse kann vorteilhaft an die Pumpe einer Scheibenwaschanlage angeschlossen werden, so daß mit der Betätigung der Scheibenwaschanlage auch die Kennzeichentafel gereinigt wird.

In der Zeichnung ist der Erfindungsgegenstand beispielsweise dargestellt. Es zeigen
- Fig. 1: eine erfindungsgemäße Vorrichtung zum Befestigen einer Kennzeichentafel an einem Kraftfahrzeug in einer zum Teil aufgerissenen, schematischen Vorderansicht,
- Fig. 2: diese Vorrichtung in einem Schnitt entlang der Linie II-II der Fig. 1 in einem größeren Maßstab,
- Fig. 3: einen Träger für die Heizleiter in einer Draufsicht in einem kleineren Maßstab und
- Fig. 4: ein elektrisches Blockschaltbild einer erfindungsgemäßen Heizeinrichtung.

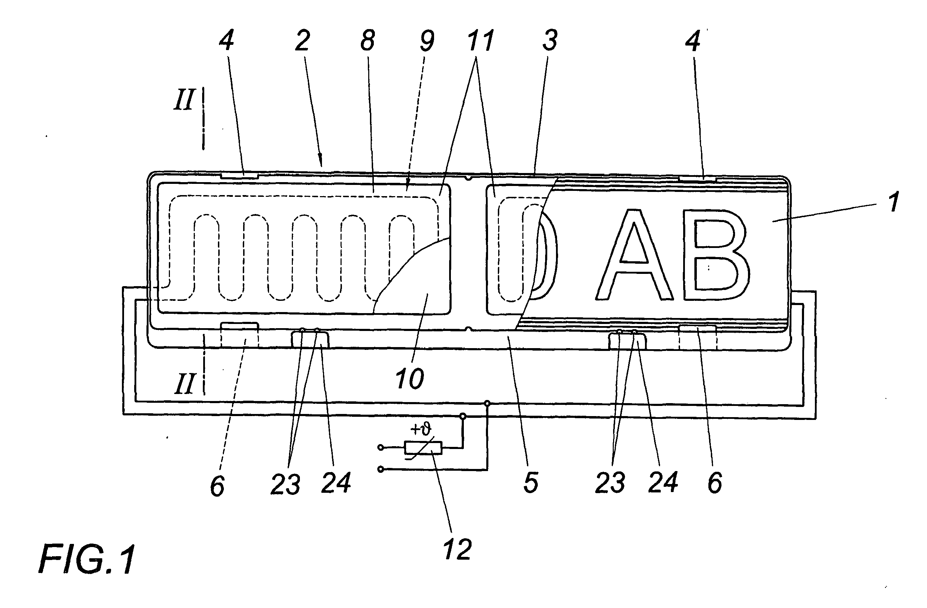

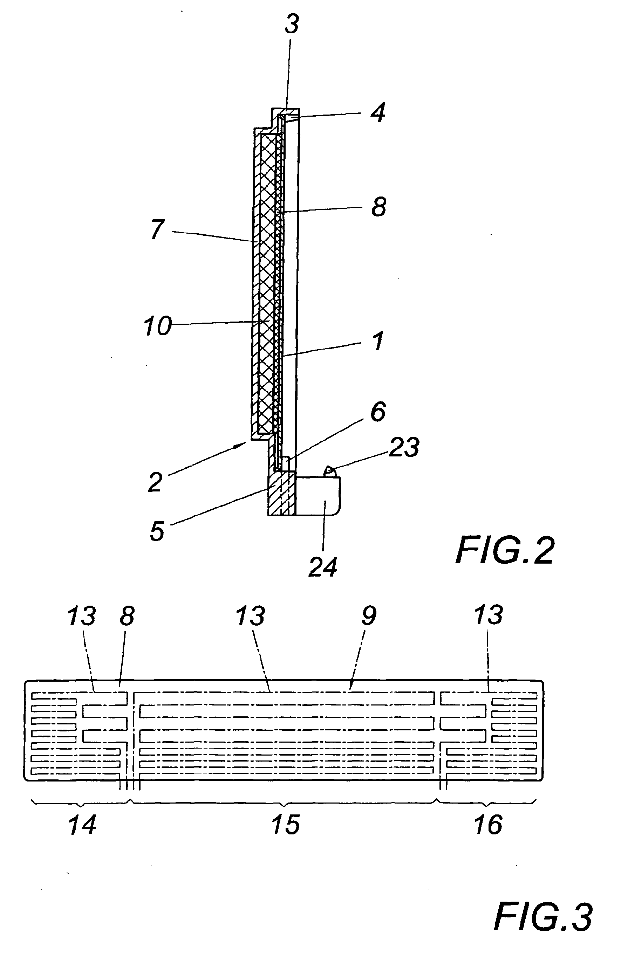

Die Vorrichtung zum Aufnehmen einer Kennzeichentafel 1 weist gemäß den Fig. 1 und 2 eine herkömmliche Halterung 2 auf, die an einem Kraftfahrzeug üblicherweise mit Hilfe von Schrauben befestigt wird und einen Einsetzrahmen 3 für die Kennzeichentafel 1 bildet. Mit Hilfe von den oberen Rand der Kennzeichentafel 1 übergreifenden Ansätzen 4 des Einsetzrahmens der Kennzeichentafel 1 übergreifenden Ansätzen 4 des Einsetzrahmens 3 sowie von im unteren Rahmenschenkel 5 verschiebbar gelagerten Sperriegeln 6, die in einer federverrasteten Sperrstellung den unteren Rand der Kennzeichentafel 1 umfassen, wird die Kennzeichentafel 1 innerhalb des Einsetzrahmens 2 in herkömmlicher Art und Weise festgehalten. Zum Unterschied von bekannten Halterungen 2 dieser Art ist jedoch zwischen der Rückwand 7 der Halterung 2 und der Kennzeichentafel 1 ein Träger 8 für eine elektrische Heizeinrichtung 9 vorgesehen. Zur Vermeidung von Wärmeverlusten kann die Heizeinrichtung 9 auf der der Kennzeichentafel 1 gegenüberliegenden Seite mit einer Wärmeisolierung 10 versehen sein, die bei einer entsprechenden Eigenelastizität den Träger 8 mit der Heizeinrichtung 9 unter einer leichten Vorspannung an die Rückseite der Kennzeichentafel 1 andrückt, um den Wärmeübergang von der Heizeinrichtung 9 auf die Kennzeichentafel 1 zu verbessern.

Nach den Fig. 1 und 2 wird die Heizeinrichtung 8 mit dem Träger 9 durch eine elektrische Heizmatte gebildet, die gemäß der Einteilung der Rückwand 7 in zwei Felder 11 unterteilt ist. Die Energieversorgung für die Heizmatte erfolgt über eine fahrzeugeigene Stromquelle, wobei dafür zu sorgen ist, daß die Verbindung zur Fahrzeugbatterie mit dem Ausschalten der Zündung unterbrochen wird, damit eine Entladung der Fahrzeugbatterie über die Heizmatte ausgeschlossen wird. Der Anschluß der Heizmatte an die Stromquelle erfolgt über einen Kaltleiter 12. Dieser Kaltleiter 12 hat als PTC-Widerstand die Eigenschaft, daß seine Leitfähigkeit mit steigender Temperatur schlagartig abnimmt, so daß solche Kaltleiter 12 zum temperaturabhängigen Einschalten der Heizmatte genützt werden können. Sinkt die Außentemperatur unter einen vorgebbaren Grenzwert beispielsweise von +4°C ab, so wird die Heizmatte eingeschaltet und aufgrund der dadurch bedingten Erwärmung der Kennzeichentafel 1 ein Aneisen von feuchten oder nassen Ablagerungen auf der Kennzeichentafel 1 verhindert. Mit einem Temperaturanstieg über den Grenzwert für den Kaltleiter 12 wird die Erwärmung der Kennzeichentafel 1 wieder ausgeschaltet. Aufgrund des Einsatzes eines Kaltleiters 12 erfolgt somit das Ein- und Ausschalten der Heizmatte in Abhängigkeit von der Außentemperatur, wodurch ein mißbräuchliches Ausschalten der Heizmatte durch einen Fahrzeuglenker unterbunden wird.

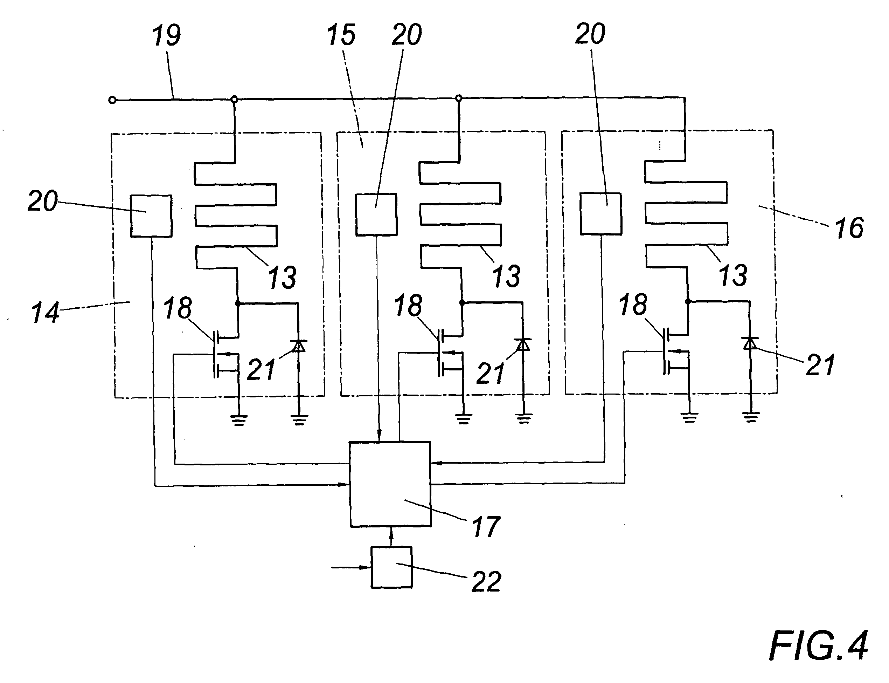

Eine weitere Möglichkeit der Ausbildung der Heizeinrichtung 8 besteht gemäß den Fig. 3 und 4 darin, als Träger 8 eine Kunststoffplatte vorzusehen, auf der auf der Kennzeichentafel 1 abgewandten Seite elektrische Heizleiter 13 aufgebracht sind, die beispielsweise in drei je einem Flächenabschnitt der Kennzeichentafel 1 zugeordnete Heizkreise 14, 15, 16 zusammengefaßt werden, so daß sich drei je für sich ansteuerbare Heizzonen ergeben, was eine Anpassung der Heizleistung an die jeweiligen Anforderungen ermöglicht. Die Heizleiterverteilung innerhalb der Heizzonen kann wiederum unterschiedlich gewählt werden, um z.B. die äußeren Randzonen und die untere Randzone stärker zu beheizen, weil diese Randzonen erfahrungsgemäß vermehrt zur Aneisung neigen. In der Fig. 3 ist diese unterschiedliche Verteilung der Heizleiter innerhalb der Heizkreise 14, 15, 16 angedeutet.

Zur Ansteuerung der einzelnen Heizkreise 14, 15, 16 dient gemäß der Fig. 4 eine Steuereinrichtung 17, die Leistungstransistoren 18 ansteuert, mit deren Hilfe die einzelnen Heizkreise 14, 15, 16 unabhängig voneinander an eine mit der Stromquelle des Kraftfahrzeugs verbindbare Versorgungsleitung 19 angeschlossen werden können. Die Ansteuerung der einzelnen Heizkreise 14, 15, 16 erfolgt über je einen den einzelnen Heizkreisen 14, 15, 16 zugeordneten Temperaturfühler 20, der die Steuereinrichtung 17 mit dem jeweiligen Temperaturistwert der zugehörigen Heizzone versorgt, so daß bei einer entsprechenden Sollwertvorgabe durch die Steuereinrichtung 17 die einzelnen Heizzonen entsprechend geregelt werden können. Die Leistungstransistoren 18 können in Abhängigkeit vom jeweiligen Steuerungsprogramm im Sinne eines Ein- und Ausschaltens, aber auch im Sinne einer Teilleistung angesteuert werden. Damit ist eine weitgehende Anpassung an die jeweiligen Bedarfsfälle möglich. Um allfällige Spannungsspitzen abbauen zu können, sind den einzelnen Heizkreisen Überspannungsableiter 21 zugeordnet.

Die Steuereinrichtung 17, die vorzugsweise einen Mikroprozessor umfaßt, kann mit den Temperaturfühlern 20 auf dem Träger 8 angeordnet werden, und zwar auf der Seite der Heizleiter 13. Diese Trägerseite mit den elektrischen und elektronischen Bauteilen wird vorzugsweise feuchtigkeitsdicht abgedeckt und mit einer Wärmeisolierung 10 gegenüber der Halterung 2 versehen. Der elektrische Anschluß der Versorgungsleitung 19 an die Stromquelle des Kraftfahrzeuges kann in herkömmlicher Weise durch ein entsprechendes Kabel erfolgen, das durch die Rückwand 7 der Halterung 2 geführt wird. Um durch den allenfalls für die Kennzeichentafelbeheizung benötigten Strom den Zündvorgang für den Kraftfahrzeugmotor nicht zu beeinträchtigen, kann die Steuereinrichtung 17 über ein Zeitglied 22 angesteuert werden, das mit der Betätigung der Zündeinrichtung des Kraftfahrzeugs angestoßen wird und daher für einen entsprechend verzögerten Heizbeginn sorgt.

Zur Unterstützung der Reinigung der Kennzeichentafel 1 durch ein Abtauen vereister bzw. zur Vereisung neigender Ablagerungen auf der Kennzeichentafel können zusätzlich Waschdüsen 23 vorgesehen werden, die vorzugsweise an die Scheibenwaschanlage des Kraftfahrzeuges angeschlossen sind, so daß bei einer Betätigung der Pumpe für die Scheibenwaschanlage auch die Kennzeichentafel 1 mit einer Reinigungsflüssigkeit besprüht wird. Im dargestellten Ausführungsbeispiel nach der Fig. 1 sind die Waschdüsen 23 jeweils in einem Gehäuse 24 zusammengefaßt, das am unteren Rahmenschenkel 5 angeordnet ist. Selbstverständlich ist aber auch jede andere Anordnung der Waschdüsen 23 möglich, weil es ja lediglich darum geht, die Kennzeichentafel 1 bei Bedarf mit einer Reinigungsflüssigkeit zu besprühen.

## Patentansprüche

1. Vorrichtung zum Befestigen einer Kennzeichentafel (1) an einem Kraftfahrzeug mit einer am Kraftfahrzeug vorgesehenen Halterung (2) für die Kennzeichentafel (1) und mit einer an eine elektrische Stromquelle des Kraftfahrzeugs anschließbaren elektrischen Heizeinrichtung (9) für die Kennzeichentafel (1), **dadurch gekennzeichnet, daß** die auf einem Träger (8) zwischen der Kennzeichentafel (1) und der Halterung (2) vorgesehene elektrische Heizeinrichtung (9) in Abhängigkeit von wenigstens einem im Halterungsbereich angeordneten Temperaturfühler (20) angesteuert ist.

2. Vorrichtung nach Anspruch 1, **dadurch gekennzeichnet, daß** auf der der Kennzeichentafel (1) abgekehrten Seite der elektrischen Heizeinrichtung (9) eine Wärmeisolierung (10) vorgesehen ist.

3. Vorrichtung nach Anspruch 1 oder 2, **dadurch gekennzeichnet, daß** die elektrische Heizeinrichtung (9) in je für sich über einen Temperaturfühler (20) ansteuerbare, über die Fläche der Kennzeichentafel (1) verteilte Heizkreise (14, 15, 16) unterteilt ist.

4. Vorrichtung nach Anspruch 3, **dadurch gekennzeichnet, daß** innerhalb der einzelnen Heizkreise (14, 15, 16) die Heizleiterverteilung über den jeweiligen Flächenabschnitt der Kennzeichentafel (1) unterschiedlich ist.

5. Vorrichtung nach einem der Ansprüche 1 bis 4, **dadurch gekennzeichnet, daß** die als Heizmatte ausgebildete elektrische Heizeinrichtung (9) über einen Kaltleiter (12) ansteuerbar ist.

6. Vorrichtung nach Anspruch 1 bis 4, **dadurch gekennzeichnet, daß** auf der der Kennzeichentafel (1) abgekehrten Seite des elektrisch isolierenden Trägers (8) neben einem Heizleiter (13) für zumindest einen Heizkreis (14, 15, 16) ein Temperaturfühler (20) für jeden Heizkreis (14, 15, 16) und eine an den bzw. die Temperaturfühler (20) angeschlossene Steuereinrichtung (17) für die Heizeinrichtung (9) vorgesehen sind.

7. Vorrichtung nach einem der Ansprüche 1 bis 6, **dadurch gekennzeichnet, daß** die elektrische Heizeinrichtung (9) über ein durch eine Zündeinrichtung für das Kraftfahrzeug ansteuerbares Zeitglied (22) ansteuerbar ist.

8. Vorrichtung nach einem der Ansprüche 1 bis 7, **dadurch gekennzeichnet, daß** der Halterung (2) wenigstens eine gegen die Vorderseite der Kennzeichentafel (1) gerichtete, an die Pumpe einer Scheibenwaschanlage angeschlossene Waschdüse (23) zugeordnet ist.

## Claims

1. Device for attaching a registration plate (1) to a motor vehicle with a holding element (2) provided on the motor vehicle for the registration plate (1) and with an electrical heating device (9) for the registration plate (1) which is adapted to be connected to an electrical power source of the motor vehicle, **characterised in that** the electrical heating device (9) provided on a carrier element (8) between the registration plate (1) and the holding element (2) is controlled in dependence upon at least one temperature sensor (20) arranged in the holding element region.

2. Device according to claim 1, **characterised in that** a heat insulation element (10) is provided on the side of the electrical heating device (9) facing away from the registration plate (1).

3. Device according to claim 1 or 2, **characterised in that** the electrical heating device (9) is subdivided into heating circuits (14, 15, 16), each controllable individually by a temperature sensor (20), distributed over the area of the registration plate (1).

4. Device according to claim 3, **characterised in that** within the individual heating circuits (14, 15, 16) the heater distribution is different over the respective area section of the registration plate (1).

5. Device according to one of the claims 1 to 4, **characterised in that** the electrical heating device (9) formed as a heating mat is adapted to be controlled by means of a cold conductor (12).

6. Device according to claim 1 to 4, **characterised in that** on the side of the electrically insulating carrier element (8) facing away from the registration plate (1), besides a heater (13) for at least one heating circuit (14, 15, 16), a temperature sensor (20) for each heating circuit (14, 15, 16) and a control device (17) for the heating device (9) connected to the temperature sensor(s) (20) are provided.

7. Device according to one of the claims 1 to 6, **characterised in that** the electrical heating device (9) is adapted to be controlled by means of a timing element (22) adapted to be controlled through an ignition device for the motor vehicle.

8. Device according to one of the claims 1 to 7, **characterised in that** at least one washing jet (23), connected to the pump of a screen washer, which is directed against the front side of the registration plate (1) is assigned to the holding element (2).

## Revendications

1. Dispositif de fixation d'une plaque d'immatriculation (1) sur un véhicule automobile, avec une fixation (2), prévue sur le véhicule automobile pour la plaque d'immatriculation (1), et avec un dispositif de chauffage (9) électrique, pouvant être raccordé à une source de courant électrique du véhicule automobile, pour la plaque d'immatriculation (1), **caractérisé en ce que** le dispositif de chauffage (9) prévu sur un support (8), entre la plaque d'immatriculation (1) et la fixation (2), peut être commandé en fonction d'au moins une sonde de température (20) disposée dans la zone de fixation.

2. Dispositif selon la revendication 1, **caractérisé en ce que**, sur la face, opposée à la plaque d'immatriculation (1), du dispositif de chauffage (9) électrique, est prévue une isolation thermique (10).

3. Dispositif selon la revendication ou 2, **caractérisé en ce que** le dispositif de chauffage (9) électrique est subdivisé en circuits de chauffage (14, 15, 16), pouvant être commandés en soi chacun par l'intermédiaire d'une sonde de température (20) et répartis sur la surface de la plaque d'immatriculation (1).

4. Dispositif selon la revendication 3, **caractérisé en ce que**, à l'intérieur des différents circuits de chauffage (14, 15, 16), la distribution des conducteurs de chauffage sur le tronçon de surface respectif de la plaque d'immatriculation (1) est différente.

5. Dispositif selon l'une des revendications 1 à 4, **caractérisé en ce que** le dispositif de chauffage (9), électrique, réalisé sous la forme de matelas chauffant, peut être commandé par l'intermédiaire d'un conducteur froid (12).

6. Dispositif selon les revendications 1 à 4, **caractérisé en ce que**, sur la face, opposée à la plaque d'immatriculation (1), du support (8) isolant de l'électricité, outre un conducteur chauffant (13) pour au moins un circuit chauffant (14, 15, 16), sont prévus une sonde de température pour chaque circuit chauffant (14, 15, 16), et un dispositif de commande (17), raccordé à la ou aux sonde(s) de température (20), pour le dispositif de chauffage (9).

7. Dispositif selon l'une des revendications 1 à 6, **caractérisé en ce que** le dispositif de chauffage (9) électrique peut être commandé par l'intermédiaire d'un organe de temporisation (22), pouvant être commandé au moyen d'un dispositif d'allumage pour le véhicule automobile.

8. Dispositif selon l'une des revendications 1 à 7, **caractérisé en ce que**, à la fixation (2), est associée au moins une buse de lavage (23), orientée vers la face avant de la plaque d'immatriculation (1) et raccordée à la pompe d'une installation de lave-vitres.
